# EUROPÄISCHE PATENTSCHRIFT

(11) **EP 1 900 553 B1**
(45) Veröffentlichungstag und Bekanntmachung des Hinweises auf die Patenterteilung: **04.11.2009**
(21) Anmeldenummer: 07017162.4
(22) Anmeldetag: 01.09.2007
(51) Int. Cl.: B60D 5/00, B61D 17/22, B62D 47/02

(54) **Balg mit im Bereich des Balgdaches angeordneter Balgdecke**
Bellows with a ceiling fitted in the area of the bellows roof
Soufflet doté d'un revêtement agencé dans la zone du sommet de soufflet

(30) Priorität: 12.09.2006 DE 202006013969 U
(43) Veröffentlichungstag der Anmeldung: 19.03.2008
(73) Patentinhaber: Hübner GmbH, 34123 Kassel (DE)
(72) Erfinder: Koch, Robert, 37242 Bad- Sooden Allendorf (DE); Mosaner, Knud, 34127 Kassel (DE)
(74) Vertreter: Walther, Walther & Hinz GbR

(56) Entgegenhaltungen:
- EP-A- 0 279 245
- EP-A- 1 743 783
- DE-A1- 10 208 557
- DE-U1- 9 413 320
- DE-U1- 29 921 498

## Beschreibung

Die Erfindung betrifft einen Balg mit im Bereich des Balgdaches angeordneter Balgdecke.

Bei Gelenkfahrzeugen, und hier insbesondere bei Gelenkbussen, sind Motorwagen und Nachläufer, also die beiden Fahrzeugteile, durch ein Gelenk miteinander gekoppelt, wobei das Gelenk einen Drehteller, auch Plattform genannt, aufweist. Ein solcher Drehteller ermöglicht zum einen die Möglichkeit des Überwechselns von dem einem Fahrzeugteil zum anderen Fahrzeugteil, bietet aber auch zusätzliche Stehplätze während der Fahrt. Dieser Drehteller samt Gelenk ist von einem Balg, und hier insbesondere von einem Faltenbalg umgeben, wobei ein solcher Balg üblicherweise zwei Seitenwände umfasst, die zumindest durch ein Balgdach miteinander verbunden sind, wobei zusätzlich noch ein Boden vorgesehen ist, so dass sich eine im Wesentlichen tunnelartige Struktur des Übergangs ergibt.

Bekanntermaßen muss der Balg, beispielsweise eines Gelenkbusses, den unterschiedlichsten Fahrbewegungen nachgeben können. Der Balg muss insbesondere in der Lage sein, sämtlichen Wank-, Knick- und Nickbewegungen folgen zu können. Wankbewegungen entstehen, wenn die beiden Fahrzeugteile relativ zueinander um die Längsachse verdreht werden; Nickbewegungen entstehen, wenn der Bus über eine Kuppe oder durch eine Senke fährt, und Knickbewegungen entstehen, wenn der Bus eine Kurve durchfährt. Üblicherweise gibt es auch Überlagerungen der einzelnen Bewegungsarten. Das heißt, dass an den Balg hohe Anforderungen im Hinblick auf die Beweglichkeit gestellt werden.

Aus der gattungsbildenden DE 102 08 557 A1 ist die Anbringung eines Dachhimmels an dem Dach eines Balges eines Übergangs zwischen zwei Fahrzeugen bekannt. Hierbei weist der Dachhimmel einzelne Befestigungsbügel auf, die mittels Klettbändern an dem Dach des Balges befestigt werden. Der Dachhimmel ist zum Dach des Balges beabstandet, so dass im Bereich des Daches geführte Versorgungsleitungen durch den Dachhimmel abgedeckt werden können. Die Balgdecke umfasst mehrere Wellen oder Falten, die im Bereich ihres Scheitels durch Klemmleisten verbunden sind.

Nach der Erfindung sind die Klemmleisten durch an der Balgseitenwand des Balges angeordnete Hülsen steckbar aufnehmbar, wobei die Klemmleisten von unten in die Hülsen einführbar sind. Der zwischen Balgdach und

Balgdecke bestehende Hohlraum dient dazu, wie bereits ausgeführt, Versorgungsleitungen unsichtbar von dem einen Fahrzeugteil in das andere Fahrzeugteil zu führen. Die Klemmleisten sind von unten in die Hülsen einführbar. Die Klemmleisten sind hierbei nach oben, d. h. in Richtung auf das Balgdach zu abgewinkelt, wobei die Abwinklung vorteilhaft derart ist, dass die Enden der Klemmleisten in die im Eckbereich des Balges angeordneten Hülsen einführbar und dort auch fixierbar sind. Die Falten oder Wellen der Balgdecke stehen über die abgewinkelten Enden der Klemmleisten über, so dass im eingebauten Zustand der Balgdecke die Hülsen und die abgewinkelten Klemmleisten abgedeckt sind. Hierdurch ergibt sich ein vorteilhafter optischer Eindruck.

Im Einzelnen ist vorgesehen, dass die Hülsen zur Aufnahme der jeweiligen Klemmleisten an dem der Balgdecke zugewandten Scheitel der Falte oder Welle der Balgseitenwand angeordnet sind. Da die Balgdecke im Wesentlichen, bis auf den geringfügigen Abstand, unmittelbar unter dem Balgdach verlaufend angeordnet ist und somit die Balgseitenwand nur geringfügig aussteift, ist hierdurch auch nur eine geringe Einschränkung der Beweglichkeit des Balges zu befürchten.

Um ein unbeabsichtigtes Lösen der Klemmleisten aus den Hülsen zu verhindern, ist nach einem weiteren Merkmal der Erfindung vorgesehen, die Klemmleisten in der Hülse, beispielsweise durch Schrauben, zu fixieren.

Anhand der Zeichnungen wird die Erfindung nachstehend beispielhaft näher erläutert.
- Fig. 1: zeigt perspektivisch eine Ansicht von innen auf einen Übergang mit einem Mittelrahmen;
- Fig. 2: zeigt einen Teil des Balges zwischen Endrahmen und Mittelrahmen, wobei aus dieser Darstellung die Anbindung der Spurfugenabdeckung an dem Balg erkennbar wird;
- Fig. 2a: zeigt als Einzelheit die Anbindung der Balgdecke an die Seitenwand des Balges;
- Fig. 2aa: zeigt die Hülse, die Klemmleiste und die Falte der Balgseitenwand in der Darstellung gemäß Fig. 2a als Einzelteile;
- Fig. 3: zeigt die Anbringung der Balgdecke von unten an das Balgdach in Explosionsdarstellung;
- Fig. 3a: zeigt die fertige Verbindung zwischen Balgdecke und Balgdach gemäß Figur 3.

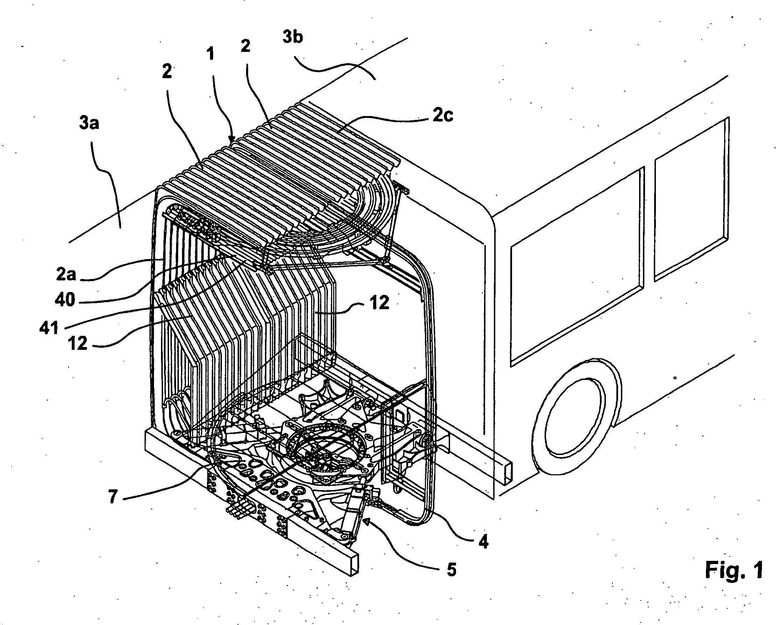

Gemäß Fig. 1 ist der Übergang insgesamt mit 1 bezeichnet. Der Übergang setzt sich zusammen aus den beiden identischen Balghälften 2, die durch den Mittelrahmen 4 miteinander verbunden sind. Endseitig sind die Balghälften an den Fahrzeugteilen 3a, 3b befestigt. Im Bereich der beiden Balghälften 2 befinden sich die beiden Spurfugenabdeckungen 12, die die Spurfuge zwischen Balgseitenwand 2a und dem Drehteller bzw. der Plattform 7 abdecken. Eine solche Spurfuge befindet sich auf jeder Seite des Balges. Unterhalb der Plattform 7 liegt das Gelenk 5. Der Balg mit den Balghälften 2 ist entsprechend der stirnseitigen Kontur der Fahrzeugteile getroffen und umgibt von unten auch das Gelenk. Der Balg ist demzufolge im Querschnitt kastenartig ausgebildet. Unterhalb des Balgdachs 2 befindet sich beabstandet dazu die Balgdecke 40, die die unter dem Balgdach geführte Kabelführung abdeckt.

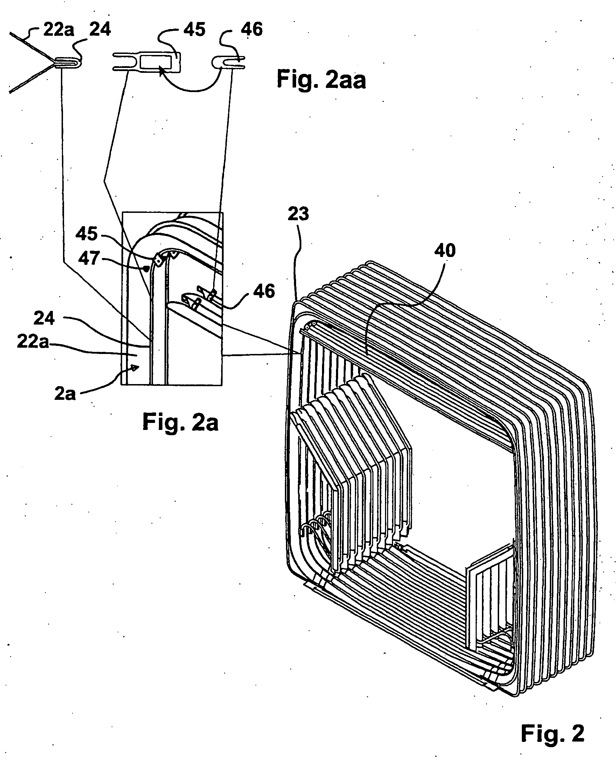

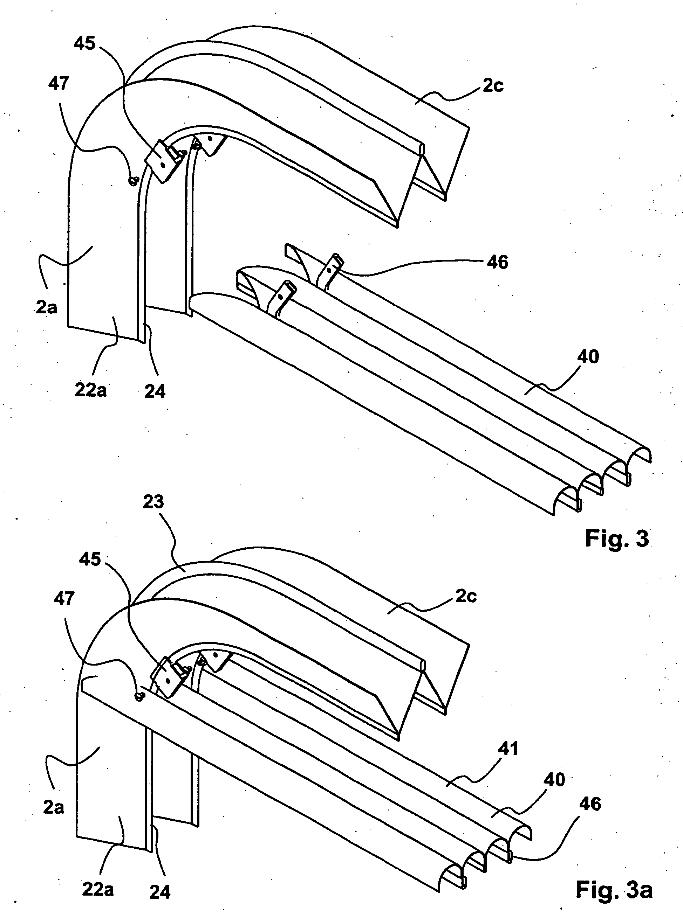

Die Seitenwand 2a weist mehrere Falten 22a auf (Fig. 3, 3a), die untereinander außen durch Einfassrahmen 23 verbunden sind und innen, d. h. auf den Innen-raum des Übergangs zu, durch ein Einfassband 24, wie sich dies aus Fig. 2aa ergibt, verbunden sind. Auf das Einfassband aufgeklemmt ist die Hülse 45, wobei in die Hülse 45 die Klemmleiste 46 von unten einführbar ist (Fig. 3, Fig. 3a).

Die Anbindung der Balgdecke 40, beabstandet zum Balgdach 2c an den Balgseitenwänden 2a, ergibt sich im einzelnen aus Fig. 3, 3a. Die Balgdecke 40 umfasst ganz ähnlich wie der Balg selbst einzelne Falten oder Wellen 41, die wiederum durch Klemmleisten 46 gehalten sind. Diese Klemmleisten 46 sind endseitig in Richtung auf die Balgseitenwand 2a zu abgebogen und laufen dort in Klemmhülsen 45 ein, wie sich dies aus der Fig. 2a mit der explosionsartigen Darstellung gemäß Fig. 2aa, aber auch aus Fig. 3, 3a ergibt. Vorgesehen ist hierbei, dass die Klemmleisten 46 der Balgdecke 40 durch Schrauben 47 in der Hülse 45 fixiert werden können. Die Hülse 45 ist mit dem Einfassband 24 verbunden, das die Falten 22a verbindet.

Wie aus der vergrößerten Figur 3, 3a hervorgeht, wird die Balgdecke 40 mit den in Richtung des Balgdaches 2c abgebogenen Klemmleisten 46 von unten in die Hülsen 45 geschoben und dort durch Schrauben 47 fixiert. Die Falten oder Wellen der Balgdecke sind seitlich über das abgewinkelte Ende der Klemmleisten hinaus geführt, so dass im eingebauten Zustand die Befestigung der Balgdecke am Balgdach abgedeckt ist.

## Patentansprüche

1. Balg mit im Bereich des Balgdaches angeordneter Balgdecke, wobei die Balgdecke (40) zur Bildung eines Hohlraumes beabstandet zum Balgdach (2c) angeordnet ist, wobei die Balgdecke (40) mehrere Wellen oder Falten (41) umfasst, die im Bereich ihres Scheitels durch Klemmleisten (46) verbunden sind, **dadurch gekennzeichnet, dass** die Klemmleisten (46) durch an der Balgseitenwand (2a) des Übergangs (1) angeordnete Hülsen (45) steckbar aufnehmbar sind, und dass die Klemmleisten (46) der Balgdecke (40) von unten in die jeweiligen Hülsen (45) einführbar sind.

2. Balg nach Anspruch 1,
**dadurch gekennzeichnet,**
**dass** die Hülsen (45) zur Aufnahme der Klemmleisten (46) an dem der Balgdecke (40) zugewandten Scheitel der Balgseitenwand (2a) angeordnet sind.

3. Balg nach einem der voranstehenden Ansprüche,
**dadurch gekennzeichnet,**
**dass** die Klemmleisten (46) in der Hülse (45) fixierbar sind.

4. Balg nach einem der voranstehenden Ansprüche,
**dadurch gekennzeichnet,**
**dass** die Hülsen (45) im Bereich der Ecken des Balgens angeordnet sind.

5. Balg nach einem der voranstehenden Ansprüche,
**dadurch gekennzeichnet,**
**dass** die Klemmleisten (46) zur Aufnahme durch die Hülsen (45) abgewinkelt sind, wobei die Falten oder Wellen der Balgdecke über die abgewinkelten Klemmleisten hinaus bis in den Grund der Falten oder Wellen der Balgseitenwand geführt sind.

## Claims

1. A bellows with a bellows ceiling disposed in the region of the bellows roof, said bellows ceiling (40) being disposed at a distance from the bellows roof (2c) in order to form a cavity, said bellows ceiling (40) incorporating several corrugations or pleats (41) that are joined together by clamping ledges (46) in the region of their apex, **characterized in that** said clamping ledges (46) may be pluggably received by bushings (45) disposed on the bellows side wall (2a) of the connection (1) and that said clamping ledges (46) of said bellows ceiling (40) may be inserted into the respective bushings (45) from underneath.

2. The bellows as set forth in claim 1,
**characterized in**
**that** the bushings (45) for receiving the clamping ledges (46) are disposed on the apex of the bellows side wall (2a) which is turned toward the bellows ceiling (40).

3. The bellows as set forth in any one of the previous claims,
**characterized in**
**that** the clamping ledges (46) may be fixed in the bushing (45).

4. The bellows as set forth in any one of the previous claims,
**characterized in**
**that** the bushings (45) are disposed in the region of the corners of the bellows.

5. The bellows as set forth in any one of the previous claims,
**characterized in**
**that** the clamping ledges (46) are angled for reception by the bushings (45), the pleats or corrugations of the bellows ceiling protruding from the angled clamping ledges and extending into the bottom of the pleats or of the corrugations of the bellows side wall.

## Revendications

1. Soufflet avec un plafond disposé à la hauteur du toit du soufflet, le plafond (40) du soufflet étant disposé à distance du toit (2c) afin de former une cavité, le plafond (40) du soufflet comprenant plusieurs ondulations ou plis (41) qui sont reliés par des baguettes de serrage (46) à la hauteur de leur sommet, **caractérisé en ce que** les baguettes de serrage (46) sont enfichables et aptes à être reçues ainsi par des manchons (45) disposés sur la paroi latérale (2a) du soufflet de l'intercirculation (1), et que les baguettes de serrage (46) du plafond (40) du soufflet sont aptes à être introduites par le bas dans les manchons (45) respectifs.

2. Soufflet selon la revendication 1,
**caractérisé en ce**
**que** les manchons (45) destinés à recevoir les baguettes de serrage (46) sont disposés sur le sommet de la paroi latérale (2a) du manchon qui est tourné vers le plafond (40) du soufflet.

3. Soufflet selon l'une quelconque des revendications précédentes,
**caractérisé en ce**
**que** les baguettes de serrage (46) sont aptes à être fixées dans le manchon (45).

4. Soufflet selon l'une quelconque des revendications précédentes,
**caractérisé en ce**
**que** les manchons (45) sont disposés à la hauteur des coins du soufflet.

5. Soufflet selon l'une quelconque des revendications précédentes,
**caractérisé en ce**
**que** les baguettes de serrage (46) destinées à être reçues par les manchons (45) sont coudées, les plis ou ondulations du plafond du soufflet s'étendant au-delà des baguettes de serrage coudées jusque dans le fond des plis ou des ondulations de la paroi latérale du soufflet.
